# EUROPEAN PATENT APPLICATION

(11) **EP 4 180 294 A1**
(43) Date of publication of application: **17.05.2023**
(21) Application number: 21849619.8
(22) Date of filing: 19.07.2021
(51) Int. Cl.: B60W 30/165, B60W 40/10, B60W 40/105, B60W 40/107

(54) **CONTROL METHOD AND APPARATUS, AND TERMINAL DEVICE**

(30) Priority: 31.07.2020 CN 202010761394
(71) Applicant: Huawei Technologies Co., Ltd., Shenzhen, Guangdong 518129 (CN)
(72) Inventor: ZHOU, Wei, Shenzhen, Guangdong 518129 (CN); LIU, Xiaoqing, Shenzhen, Guangdong 518129 (CN)
(74) Representative: Isarpatent
(86) International application number: PCT/CN2021/107175
(87) International publication number: WO 2022/022317

(57) **Abstract**

A control method and apparatus and a terminal device are provided. The method includes: obtaining first status information of a first terminal, where the first status information includes at least one first dynamic parameter and/or at least one first static parameter; obtaining second status information of a second terminal, where the second status information includes at least one second dynamic parameter and/or at least one second static parameter; determining that the second terminal performs lateral movement; and determining, based on the first status information and/or the second status information, whether to control the first terminal to perform lateral movement.

## Description

This application claims priority to Chinese Patent Application No. 202010761394.8, filed with the China National Intellectual Property Administration on July 31, 2020 and entitled "CONTROL METHOD AND APPARATUS AND TERMINAL DEVICE", which is incorporated herein by reference in its entirety.

### TECHNICAL FIELD

This application relates to the perception fusion field, and in particular, to a control method and apparatus and a terminal device.

### BACKGROUND

With development of society, intelligent terminals such as intelligent transportation devices, intelligent household devices, and robots are gradually entering people's daily life. Sensors play an important role in the intelligent terminals. During movement of an intelligent terminal, various sensors, such as a millimeter-wave radar, a laser radar, a camera, and an ultrasonic radar, mounted on the intelligent terminal sense a surrounding environment, collect data, identify a moving object (for example, a vehicle in front), recognize a static scenario (for example, a lane line or a signboard), and further perform path planning with reference to navigator and map data. With the foregoing means, a possible danger may be detected in advance, and a necessary avoidance means may be taken under assistance or even autonomously, thereby effectively improving safety and comfort of the intelligent terminal.

Specifically, more than 10 functions have been developed for an advanced driver assistance system (advanced driver assistance systems, ADAS) carried on an intelligent transportation device, for example, an intelligent car, including adaptive cruise control (adaptive cruise control, ACC), autonomous emergency braking (autonomous emergency braking, AEB), lane change assist (lane change assist, LCA), blind spot monitoring (blind spot monitoring, BSD), and the like. Currently, during automated driving and assisted driving, an intelligent terminal may adjust a travel status of the intelligent terminal with reference to a travel status of another terminal in a surrounding environment and based on the travel status of the another terminal. However, an accident is usually likely to occur in a process in which the intelligent terminal adjusts the travel status of the intelligent terminal based on the travel status of the another terminal.

Therefore, how to provide a safer control method becomes a technical issue that urgently needs to be addressed.

### SUMMARY

Embodiments of this application provide a control method and apparatus and a terminal device, to determine whether a first terminal is to be controlled to perform lateral movement when a second terminal performs lateral movement, thereby reducing an accident occurrence probability during movement of the first terminal, and improving safety of movement of the first terminal.

According to a first aspect, an embodiment of this application provides a control method. The method includes: obtaining first status information of a first terminal, where the first status information includes at least one first dynamic parameter and/or at least one first static parameter; obtaining second status information of a second terminal, where the second status information includes at least one second dynamic parameter and/or at least one second static parameter; determining that the second terminal performs lateral movement; and determining, based on the first status information and/or the second status information, whether to control the first terminal to perform lateral movement.

In the method, a condition for controlling the first terminal to perform lateral movement is set, thereby avoiding a case in which the first terminal is controlled to perform lateral movement in any cases when the second terminal performs lateral movement, reducing an accident occurrence probability, and improving safety of movement of the first terminal.

In a possible implementation, the first status information includes at least one first dynamic parameter, and the first dynamic parameter includes speed information of the first terminal.

The determining, based on the first status information and/or the second status information, whether to control the first terminal to perform lateral movement includes:
determining that a speed of the first terminal is less than or equal to a first threshold, and controlling the first terminal to perform lateral movement; or determining that a speed of the first terminal is greater than a first threshold, and preventing the first terminal from performing lateral movement.

In the method, whether to control the first terminal to perform lateral movement is determined based on a magnitude of the speed of the first terminal, thereby reducing a probability that the first terminal has a rollover accident when performing lateral movement due to an excessively high speed of the first terminal, and improving safety of movement of the first terminal.

In a possible implementation, the second status information includes at least one second dynamic parameter, and the second dynamic parameter includes heading angle information of the second terminal.

The determining, based on the first status information and/or the second status information, whether to control the first terminal to perform lateral movement includes:
determining that a heading angle of the second terminal is less than or equal to a preset angle threshold, and controlling the first terminal to perform lateral movement; or determining that a heading angle of the second terminal is greater than a preset angle threshold, and preventing the first terminal from performing lateral movement.

In the method, whether to control the first terminal to perform lateral movement is determined based on a magnitude of the heading angle of the second terminal, thereby reducing a probability that the first terminal has a rollover accident when performing lateral movement due to an excessively large turning angle of the second terminal, and improving safety of movement of the first terminal.

In a possible implementation, the second status information includes at least one second dynamic parameter, and the second dynamic parameter includes duration in which the second terminal is located in front of the first terminal in a same lane.

The determining, based on the first status information and/or the second status information, whether to control the first terminal to perform lateral movement includes:
determining that the duration is greater than or equal to a preset duration threshold, and controlling the first terminal to perform lateral movement; or determining that the duration is less than a preset duration threshold, and preventing the first terminal from performing lateral movement.

In the method, whether the second terminal is suitable as a follow-up target may be determined based on the duration in which the second terminal is located in front of the first terminal in a same lane; and when the second terminal is suitable as a follow-up target, it is determined that the first terminal is to be controlled to perform lateral movement, but when the second terminal is not suitable as a follow-up target, the first terminal is prevented from performing lateral movement, thereby avoiding a phenomenon that the first terminal randomly selects a follow-up target, and improving safety of movement of the first terminal.

In a possible implementation, before the controlling the first terminal to perform lateral movement, the method includes:
determining a probability that a collision occurs after the first terminal performs lateral movement, and determining that the collision probability is less than a preset probability threshold.

In the method, the probability that a collision occurs after the first terminal performs lateral movement is determined, thereby reducing a probability that the first terminal has a collision accident after performing lateral movement, and improving safety of movement of the first terminal.

In a possible implementation, the method further includes:
controlling the first terminal to perform longitudinal movement in a longitudinal movement direction of the second terminal.

In a possible implementation, the method further includes:
after the first terminal is prevented from performing lateral movement and the first terminal is controlled to perform longitudinal movement in the longitudinal movement direction of the second terminal, determining that the second terminal deviates from a current lane, and controlling the first terminal to travel along a lane line of the current lane, or re-determining a follow-up target of the first terminal.

In the method, when it is determined that the second terminal deviates from the current lane, the second terminal is no longer suitable as a follow-up target. In this case, the first terminal is prevented from continuing to follow the second terminal, thereby improving safety of movement of the first terminal.

In a possible implementation, the method further includes:
determining that clarity of a lane line of a lane in which the first terminal is located is less than a preset clarity threshold, and controlling the first terminal to travel along a predicted lane line, where the predicted lane line is obtained through prediction in a movement direction of the first terminal based on historical data of the lane line.

In the method, when the clarity of the lane line of the lane in which the first terminal is located is low, a lane line of a current lane is predicted, and the first terminal is controlled to travel along the predicted lane line, thereby reducing a probability that the first terminal deviates from the current lane, and improving safety of movement of the first terminal.

In a possible implementation, the method further includes: before the second terminal and the first terminal are located in a same lane and the second terminal is located in front of the first terminal, controlling the first terminal to move by following a third terminal.

According to a second aspect, an embodiment of this application provides a control apparatus. The apparatus includes:
an obtaining unit, configured to: obtain first status information of a first terminal, where the first status information includes at least one first dynamic parameter and/or at least one first static parameter; and obtain second status information of a second terminal, where the second status information includes at least one second dynamic parameter and/or at least one second static parameter; and
a processing unit, configured to: if it is determined that the second terminal performs lateral movement, determine, based on the first status information and/or the second status information, whether to control the first terminal to perform lateral movement.

In a possible implementation, the first status information includes at least one first dynamic parameter, and the first dynamic parameter includes speed information of the first terminal.

The processing unit is further configured to: determine that a speed of the first terminal is less than or equal to a first threshold, and control the first terminal to perform lateral movement; or determine that a speed of the first terminal is greater than a first threshold, and prevent the first terminal from performing lateral movement.

In a possible implementation, the second status information includes at least one second dynamic parameter, and the second dynamic parameter includes heading angle information of the second terminal.

The processing unit is further configured to: determine that a heading angle of the second terminal is less than or equal to a preset angle threshold, and control the first terminal to perform lateral movement; or determine that a heading angle of the second terminal is greater than a preset angle threshold, and prevent the first terminal from performing lateral movement.

In a possible implementation, the second status information includes at least one second dynamic parameter, and the second dynamic parameter includes duration in which the second terminal is located in front of the first terminal in a same lane.

The processing unit is further configured to: determine that the duration is greater than or equal to a preset duration threshold, and control the first terminal to perform lateral movement; or determine that the duration is less than a preset duration threshold, and prevent the first terminal from performing lateral movement.

In a possible implementation, the processing unit is configured to: before controlling the first terminal to perform lateral movement, determine a probability that a collision occurs after the first terminal performs lateral movement, and determine that the collision probability is less than a preset probability threshold.

In a possible implementation, the processing unit is further configured to control the first terminal to perform longitudinal movement in a longitudinal movement direction of the second terminal.

In a possible implementation, the processing unit is further configured to: after the first terminal is prevented from performing lateral movement and the first terminal is controlled to perform longitudinal movement in the longitudinal movement direction of the second terminal, determine that the second terminal deviates from a current lane, and control the first terminal to travel along a lane line of the current lane, or re-determine a follow-up target of the first terminal.

In a possible implementation, the processing unit is further configured to: determine that clarity of a lane line of a lane in which the first terminal is located is less than a preset clarity threshold, and control the first terminal to travel along a predicted lane line, where the predicted lane line is obtained through prediction in a movement direction of the first terminal based on historical data of the lane line.

In a possible implementation, the processing unit is further configured to: before the second terminal and the first terminal are located in a same lane and the second terminal is located in front of the first terminal, control the first terminal to move by following a third terminal.

According to a third aspect, an embodiment of this application provides a control apparatus, including:
at least one memory, configured to store a program; and
at least one processor, configured to execute the program stored in the memory, where when the program stored in the memory is executed, the processor is configured to perform the method provided in the first aspect.

According to a fourth aspect, an embodiment of this application provides a terminal device, including the apparatus provided in the second aspect or the third aspect.

In a possible implementation, the terminal device includes a transportation tool or an intelligent device. The transportation tool or the intelligent device includes an unmanned aerial vehicle, an unmanned transportation vehicle, a car, a robot, or the like.

According to a fifth aspect, an embodiment of this application provides a computer storage medium. The computer storage medium stores instructions. When the instructions are run on a computer, the computer is enabled to perform the method provided in the first aspect.

According to a sixth aspect, an embodiment of this application provides a computer program product including instructions. When the instructions are run on a computer, the computer is enabled to perform the method provided in the first aspect.

According to the control method and apparatus and the terminal device provided in embodiments of this application, during movement of the first terminal, if it is determined that the second terminal performs lateral movement, it may be determined, based on status information of the first terminal and/or status information of the second terminal, whether to control the first terminal to also perform lateral movement. A condition for controlling the first terminal to perform lateral movement is set, thereby avoiding a case in which the first terminal is controlled to perform lateral movement in any cases when the second terminal performs lateral movement, reducing an accident occurrence probability, and improving safety of movement of the first terminal.

### BRIEF DESCRIPTION OF DRAWINGS

FIG. 1a and FIG. 1b are schematic diagrams of an application scenario of a control method according to an embodiment of this application;
FIG. 2a is a schematic diagram of locations of vehicles when a vehicle travels in a follow-up manner according to an embodiment of this application;
FIG. 2b is another schematic diagram of locations of vehicles when a vehicle travels in a follow-up manner according to an embodiment of this application;
FIG. 2c is still another schematic diagram of locations of vehicles when a vehicle travels in a follow-up manner according to an embodiment of this application;
FIG. 3a to FIG. 3c are schematic diagrams of another application scenario of a control method according to an embodiment of this application;
FIG. 4 is a diagram of a system architecture of a vehicle according to an embodiment of this application;
FIG. 5a and FIG. 5b are schematic diagrams of a location change of a vehicle at different moments according to an embodiment of this application;
FIG. 6 is a schematic diagram of a vehicle traveling in a lane according to an embodiment of this application;
FIG. 7a is a schematic diagram of a scenario before a vehicle performs lateral movement according to an embodiment of this application;
FIG. 7b is a schematic diagram of another scenario before a vehicle performs lateral movement according to an embodiment of this application;
FIG. 7c is a schematic diagram of still another scenario before a vehicle performs lateral movement according to an embodiment of this application;
FIG. 8a is a schematic diagram of a scenario in which a vehicle travels according to an embodiment of this application;
FIG. 8b is a schematic diagram of another scenario in which a vehicle travels according to an embodiment of this application;
FIG. 9a is a schematic diagram of a shape of an extended linear lane line according to an embodiment of this application;
FIG. 9b is a schematic diagram of a shape of an extended curved lane line according to an embodiment of this application;
FIG. 10 is a schematic diagram of steps of a control method according to an embodiment of this application;
FIG. 11 is a schematic diagram of a step of determining, based on a collision probability, whether a first terminal is to be controlled to perform lateral movement in a control method according to an embodiment of this application;
FIG. 12 is a schematic diagram of a step of controlling a first terminal based on whether a second terminal deviates from a lane in a control method according to an embodiment of this application;
FIG. 13 is a schematic diagram of a structure of a control apparatus according to an embodiment of this application;
FIG. 14 is a schematic diagram of a structure of another control apparatus according to an embodiment of this application; and
FIG. 15 is a schematic diagram of a structure of a chip according to an embodiment of this application.

### DESCRIPTION OF EMBODIMENTS

To make objectives, technical solutions, and advantages of embodiments of this application clearer, the following describes technical solutions in embodiments of this application with reference to accompanying drawings.

In descriptions of embodiments of this application, terms such as "in an example", "for example", or "as an example" are used to represent an example, an illustration, or a description. Any embodiment or design scheme described as an "example" or "for example" in embodiments of this application should not be explained as being more preferred or having more advantages than another embodiment or design scheme. Specifically, the terms such as "in an example", "for example", or "as an example" are used to present related concepts in a specific manner.

In descriptions of embodiments of this application, the term "and/or" describes only an association relationship for describing associated objects and indicates that three relationships may exist. For example, A and/or B may indicate the following three cases: Only A exists, only B exists, and both A and B exist. In addition, the term "a plurality of" means two or more, unless otherwise specified. For example, a plurality of systems refer to two or more systems, and a plurality of screen terminals refer to two or more screen terminals.

In addition, terms "first" and "second" are merely intended for a purpose of description, and shall not be understood as an indication or implication of relative importance or implicit indication of an indicated technical feature. Therefore, a feature limited by "first" or "second" may explicitly indicate or implicitly include one or more features. Terms "include", "contain", "have", and their variants all mean "include but are not limited to", unless otherwise specifically emphasized in another manner.

It should be understood that a terminal in embodiments of this application may be a vehicle, an intelligent robot, an unmanned aerial vehicle, or the like. The following provides explanations and descriptions by using an example in which the terminal is a vehicle.

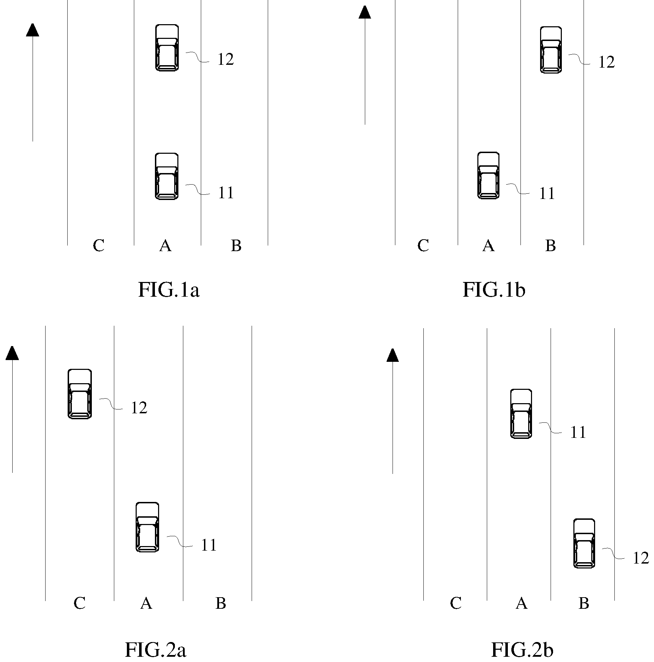

FIG. 1a and FIG. 1b are schematic diagrams of an application scenario of a control method according to an embodiment of this application. As shown in FIG. 1a, a vehicle 11 and a vehicle 12 travel in one lane (that is, a lane A), the vehicle 11 is located behind the vehicle 12, and a direction indicated by an arrow in the figure is a travel direction of the vehicles. The vehicle 11 travels by following the vehicle 12. In other words, the vehicle 11 and the vehicle 12 perform a same travel policy. For example, when the vehicle 12 accelerates, the vehicle 11 also accelerates; when the vehicle 12 decelerates, the vehicle 11 also decelerates; and when the vehicle 12 moves in a direction toward a lane B, the vehicle 11 also moves in a direction toward the lane B. Then, as shown in FIG. 1b, the vehicle 12 enters the lane B from the lane A for traveling. In a process in which the vehicle 12 moves from the lane A to the lane B, the vehicle 12 performs lateral movement. In this case, to ensure travel safety of the vehicle 11, whether the vehicle 11 is to be controlled to also perform lateral movement is determined, to determine whether the vehicle 11 is to be controlled to continue to follow the vehicle 12. For example, when a travel speed of the vehicle 11 is excessively high, if the vehicle 11 is controlled to perform lateral movement, the vehicle 11 is likely to have a rollover accident. Therefore, in this case, the vehicle 11 may be prevented from performing lateral movement, to temporarily stop the vehicle 11 from moving by following the vehicle 12. When a travel speed of the vehicle 11 is low, if the vehicle 11 is controlled to perform lateral movement, the vehicle 11 is not likely to have a rollover accident. Therefore, in this case, the vehicle 11 may be controlled to perform lateral movement, so that the vehicle 11 is controlled to continue to follow the vehicle 12. Optionally, the preventing the vehicle 11 from performing lateral movement may be outputting a control instruction for prohibiting steering, limiting a steering angle of a steering wheel of the vehicle 11, stopping outputting a control instruction related to lateral movement, or the like.

It should be understood that, in this embodiment, a horizontal direction is a left-right direction in the figure, that is, a direction from the lane A to the lane B or a direction from the lane B to the lane A. A longitudinal direction is an up-down direction in the figure, that is, a direction from the vehicle 11 to the vehicle 12 or a direction from the vehicle 12 to the vehicle 11 in FIG. 1a.

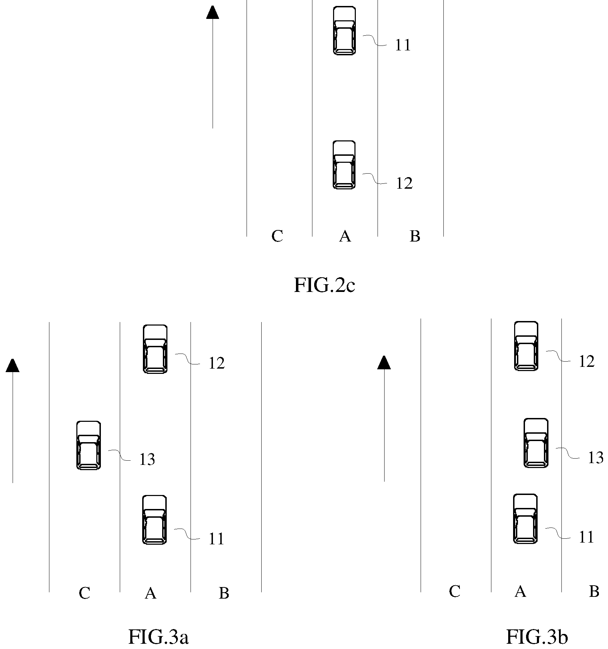

It should be noted that, when the vehicle 11 travels by following the vehicle 12, the vehicle 11 and the vehicle 12 may be alternatively located in different lanes, and/or relative locations of the vehicle 11 and the vehicle 12 may be alternatively different. As shown in FIG. 2a, the vehicle 11 travels in the lane A, and the vehicle 12 travels in a lane C. In this case, the vehicle 12 is located in the front left of the vehicle 11. As shown in FIG. 2b, the vehicle 11 travels in the lane A, and the vehicle 12 travels in the lane B. In this case, the vehicle 12 is located in the rear right of the vehicle 11. As shown in FIG. 2c, both the vehicle 11 and the vehicle 12 travel in the lane A. In this case, the vehicle 12 is located behind the vehicle 11.

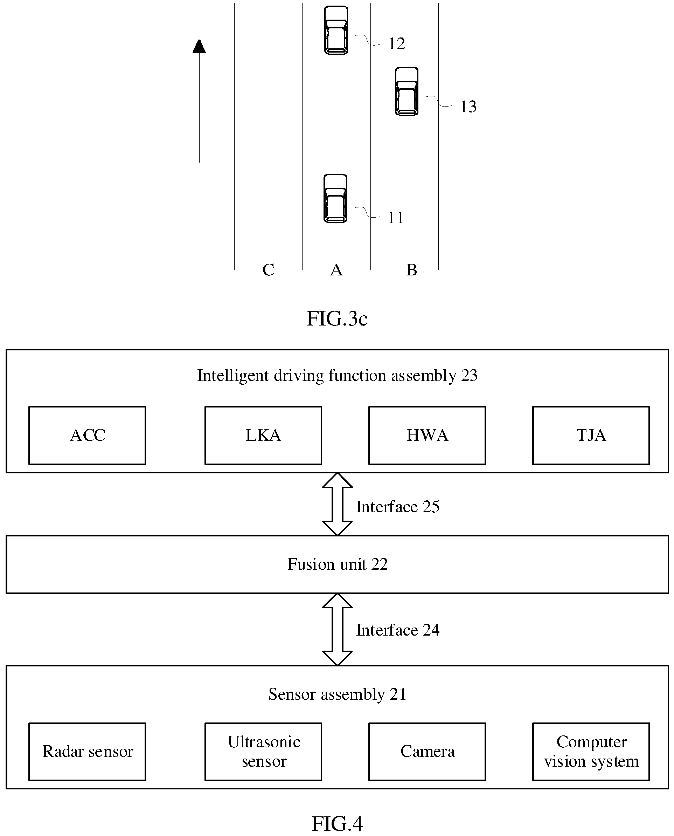

FIG. 3a to FIG. 3c are schematic diagrams of another application scenario of a control method according to an embodiment of this application. As shown in FIG. 3a, at a moment t1, both the vehicle 11 and the vehicle 12 are located in the lane A, the vehicle 11 travels by following the vehicle 12, and a vehicle 13 travels in the lane C adjacent to the lane A. As shown in FIG. 3b, at a moment t2, the vehicle 13 enters the lane A from the lane C for traveling. As shown in FIG. 3c, at a moment t3, the vehicle 13 enters the lane B from the lane A for traveling. In this scenario, duration in which both the vehicle 13 and the vehicle 11 are in the lane A and the vehicle 13 is located in front of the vehicle 11 may be as follows: Δt = t3 - t2. If Δt is less than a preset duration threshold, it may be determined that the vehicle 13 continuously changes lanes. In this case, if the vehicle 11 is controlled to stop traveling by following the vehicle 12 and start to follow the vehicle 13, the vehicle 11 is likely to deviate from a travel path. In addition, when a plurality of vehicles continuously change lanes, the vehicle 11 is also likely to continuously or even reciprocatively change lanes, affecting travel safety of the vehicle 11. Therefore, if Δt is less than the preset duration threshold, that is, when the vehicle 13 continuously changes lanes, for travel safety of the vehicle 11, the vehicle 11 may be prevented from performing lateral movement when it is determined that the vehicle 13 performs lateral movement. In this case, the vehicle 11 may be controlled to continue to follow the vehicle 12. If Δt is greater than or equal to the preset duration threshold, that is, when the vehicle 13 does not continuously change lanes, the vehicle 11 may be controlled to perform lateral movement when it is determined that the vehicle 13 performs lateral movement. In this case, the vehicle 11 may be controlled to follow the vehicle 13. In other words, if the vehicle 13 and the vehicle 11 are located in one lane and duration in which the vehicle 13 is located in front of the vehicle 11 is greater than or equal to the preset duration threshold, the vehicle 13 may serve as a follow-up target of the vehicle 11; or when the duration is less than the preset duration threshold, the vehicle 13 is prevented from serving as a follow-up target of the vehicle 11, that is, in this case, the vehicle 12 still serves as a follow-up target of the vehicle 11.

It should be understood that, in this embodiment of this application, different vehicles may communicate with each other through an internet of vehicles, to obtain travel data of each other.

The following describes a system architecture of the vehicle 11.

FIG. 4 is a diagram of a system architecture of a vehicle. FIG. 4 shows a sensor assembly 21, a fusion unit 22, and an intelligent driving function assembly 23. The sensor assembly 21 is connected to the fusion unit 22 through an interface 24. The fusion unit 22 is connected to the intelligent driving function assembly 23 through an interface 25.

The sensor assembly 21 may include a vehicle posture sensor and/or a perception sensor, or the like. Data collected by the sensor assembly 21 may be transmitted to the fusion unit 22 through the interface 24. The vehicle posture sensor may obtain travel status information, such as a speed, an acceleration, or a heading angle, of a current vehicle (for example, the vehicle 11), and obtain external environment information, such as road condition information, of the current vehicle. The perception sensor may obtain travel status information, such as a speed or a heading angle, of a target vehicle (for example, the vehicle 12). Optionally, the vehicle posture sensor may include one or more of a gyro sensor, a radar sensor, an ultrasonic sensor, a camera, a computer vision system, and the like. The radar sensor may include a laser radar sensor and/or a millimeter-wave radar sensor, or the like. The perception sensor may include one or more of a camera, a radar sensor, an ultrasonic sensor, and the like.

The radar sensor may sense an object in a surrounding environment of the vehicle by using a radio signal, and may also sense a speed and/or a travel direction or the like of the object.

The camera may be configured to capture a plurality of images of the surrounding environment of the vehicle. The camera may be a still camera or a video camera.

The computer vision system may operate to process and analyze an image captured by the camera, to recognize objects and/or features in the surrounding environment of the vehicle. The objects and/or the features may include a traffic signal, a road boundary, an obstacle, another vehicle, and the like. The computer vision system may use an object recognition algorithm, a structure from motion (structure from motion, SFM) algorithm, video tracking, other computer vision technologies, and the like.

The fusion unit 22 may transmit the data collected by the sensor assembly 21 to the intelligent driving function assembly 23 through the interface 25, so that the intelligent driving function assembly 23 may implement an intelligent driving function based on the data collected by the sensor assembly 21.

The intelligent driving function assembly 23 may receive, through the interface 25, the data that is collected by the sensor assembly 21 and that is transmitted by the fusion unit 22, and then implement, based on the received data, an intelligent driving function, for example, various different intelligent driving or automated driving functions such as adaptive cruise control (adaptive cruise control, ACC), lane keeping assist (lane keeping assist, LKA), high way assist (high way assist, HWA), and traffic jam assist (traffic jam assist, TJA).

The interface 24 can implement data transmission between the sensor assembly 21 and the fusion unit 22, and may be an interface, between a sensor and a fusion module, that is defined in ISO 23150. The interface 25 can implement data transmission between the fusion unit 22 and the intelligent driving function assembly 23. Content of a message transmitted by the interface 25 may include but is not limited to: a speed, a heading angle, and historical trajectory information of the current vehicle (for example, the vehicle 11); a type, a speed, a heading angle, and a motion state of a target vehicle (for example, the vehicle 12); lane line information and virtual lane information; and target status information, such as a speed, a motion status, and a collision time, of another vehicle around the current vehicle.

In an example, the intelligent driving function assembly 23 may include an inference module and a control module.

The inference module may select a follow-up target for the current vehicle (for example, the vehicle 11) based on the data collected by the sensor assembly 21, control the current vehicle (for example, the vehicle 11) to perform longitudinal movement, determine whether the current vehicle (for example, the vehicle 11) is to be controlled to perform lateral movement, determine whether the follow-up target performs lateral movement, and the like, generate a control instruction by using a determining result, and send the control instruction to the control module. For example, when a travel speed of the vehicle 11 is high, it is determined that the vehicle 11 may be prevented from performing lateral movement, and a control instruction for preventing lateral movement is generated and sent to the control module; and when a travel speed of the vehicle 11 is low, it is determined that the vehicle 11 may be controlled to perform lateral movement, and a control instruction for performing lateral movement is generated and sent to the control module. It should be understood that the control instruction generated by the inference module may include one or more of performing lateral movement, preventing lateral movement, performing longitudinal movement, preventing longitudinal movement, and the like. The inference module may combine different control instructions into one control instruction for output, or may separately output different control instructions. For example, if control instructions include performing lateral movement and performing longitudinal movement, the two control instructions may be combined into performing both lateral movement and longitudinal movement, and transmitted to the control module; or the two control instructions may be separately transmitted to the control module.

The control module may control the vehicle according to the control instruction generated by the inference module. For example, when the control instruction is performing both lateral movement and longitudinal movement, the vehicle is controlled to perform both lateral movement and longitudinal movement; when the control instruction is performing only lateral movement, the vehicle may be controlled to perform only lateral movement; or when the control instruction is performing only longitudinal movement, the vehicle may be controlled to perform only longitudinal movement.

The following describes a control method provided in embodiments of this application by using the application scenario constituted by FIG. 1a and FIG. 1b as an example and with reference to the system architecture shown in FIG. 4, and the like. It should be noted that the control method provided in embodiments of this application may be performed by a vehicle, a controller in a vehicle, a chip in a vehicle, or the like.

Still as shown in FIG. 1a, during traveling, the vehicle 11 may continuously or intermittently determine whether the vehicle 12 performs lateral movement.

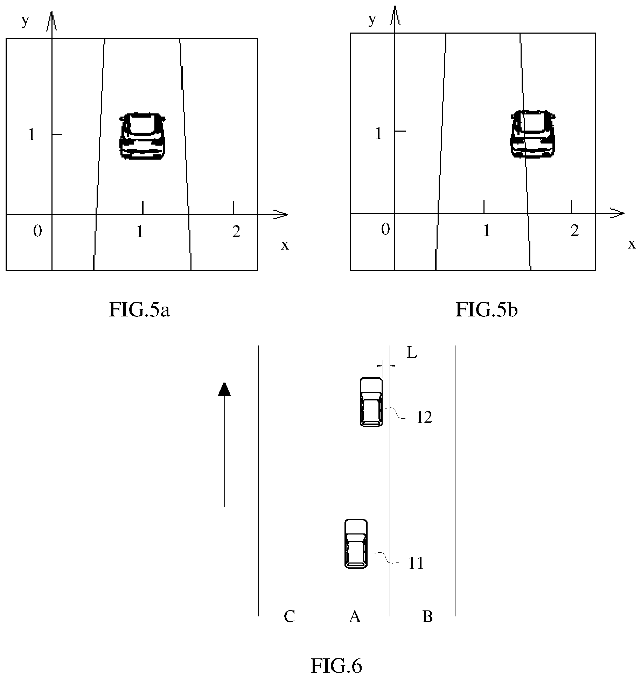

In a possible implementation, a camera is disposed on the vehicle 11. Images of the vehicle 12 at different moments may be collected by using the camera, an image at a specific moment is selected as a reference image, and an image collected after the moment is used as a target image. Then location coordinates of the vehicle 12 in the target image are compared with location coordinates in the reference image, to determine whether the vehicle 12 performs lateral movement. As shown in FIG. 5a, the location coordinates of the vehicle 12 in the reference image are (1, 1). As shown in FIG. 5b, the location coordinates of the vehicle 12 in the target image are (1.5, 1). In this case, a location of the vehicle 12 in an X-axis direction changes. Therefore, it may be determined that the vehicle 12 performs lateral movement. It should be understood that FIG. 5a and FIG. 5b show image information, of the vehicle 12, that is collected by the vehicle 11 when the vehicle 11 is located behind the vehicle 12. In addition, lane lines are represented as being in a non-parallel state to truly present road conditions.

In another possible implementation, sensors such as a millimeter-wave radar, a camera, and a laser radar are disposed on the vehicle 11. A speed vector of the vehicle 12 may be detected by using the sensors, and the speed vector is decomposed along a normal direction of a travel direction of the vehicle 11 to obtain a speed vector component. If the speed vector component exceeds a preset vector threshold and duration in which the speed vector component exceeds the preset vector threshold exceeds a preset time threshold, it may be determined that the vehicle 12 performs lateral movement.

In an example, during traveling, the vehicle 11 may further obtain first status information of the vehicle 11. The first status information includes at least one first dynamic parameter and/or at least one first static parameter. The first dynamic parameter may include speed information, acceleration information, or the like of the vehicle 11. The first static parameter may include an outline size, a vehicle model, or the like of the vehicle 11.

The first dynamic parameter may be obtained by using a corresponding sensor. For example, when the first dynamic parameter is the speed information, the speed information may be obtained by using a radar sensor on the vehicle. The first static parameter may be pre-calibrated and stored on the vehicle 11. When the first static parameter is required, stored data may be directly invoked.

In an example, during traveling, the vehicle 11 may alternatively obtain second status information of the vehicle 12. The second status information includes at least one second dynamic parameter and/or at least one second static parameter. The second dynamic parameter may include heading angle information of the vehicle 12, or may include duration in which the vehicle 12 is located in front of the vehicle 11 in a same lane, or the like. The second static parameter may include an outline size, a vehicle model, or the like of the vehicle 12.

When the second dynamic parameter is the heading angle information of the vehicle 12, the vehicle 12 may obtain the heading angle information by using a heading angle sensor of the vehicle 12. Then the vehicle 12 may perform data transmission with the vehicle 11 through a network, to transmit the heading angle information of the vehicle 12 to the vehicle 11, so that the vehicle 11 can obtain the heading angle information of the vehicle 12. Alternatively, the vehicle 11 may detect the heading angle information of the vehicle 12 or the like by using a radar sensor on the vehicle 11.

When the second dynamic parameter is the duration in which the vehicle 12 is located in front of the vehicle 11 in a same lane, and when the vehicle 11 determines that the vehicle 12 is located in the lane A and the vehicle 12 is located in front of the vehicle 11, the vehicle 11 starts to record time by using a timing apparatus such as a timer, to obtain the duration. A case in which the vehicle 12 is located in the lane A may include: An entire body of the vehicle 12 enters the lane A, and a distance between the vehicle 12 and a lane line on at least one side of the lane A is greater than a preset distance. For example, as shown in FIG. 6, the entire body of the vehicle 12 enters the lane A. In this case, a distance L between a right-side body of the vehicle 12 and a right-side lane line of the lane A is 0.5 m. If the preset distance is 0.1 m, it may be determined that the vehicle 12 is located in the lane A.

Optionally, the vehicle 11 may collect an image in front of the vehicle 11 by using a camera, and process the collected image by using a computer vision system, to obtain a relative location relationship between the vehicle 12 and the lane line, to further determine whether the entire body of the vehicle 12 enters the lane A.

The second static parameter may also be pre-calibrated and stored on the vehicle 12. When the second static parameter is required, the vehicle 12 may perform data transmission with the vehicle 11 through a network, to transmit the second static parameter to the vehicle 11, so that the vehicle 11 can obtain the second static parameter.

Then the vehicle 12 moves in a direction toward the lane B. In this case, it may be determined that the vehicle 12 performs lateral movement, and it may be determined, based on the first status information and/or the second status information, whether the vehicle 11 is to be controlled to perform lateral movement.

In an example, if the first status information includes the at least one first dynamic parameter and the first dynamic parameter includes the speed information of the vehicle 11, when a speed of the vehicle 11 is greater than a preset speed threshold, a travel speed of the vehicle 11 is high, and in this case, the vehicle 11 may be prevented from performing lateral movement, that is, the vehicle 11 is prevented from moving in a direction toward the lane B, to prevent the vehicle 11 from having a rollover accident or the like; and when the speed of the vehicle 11 is less than or equal to the preset speed threshold, the vehicle 11 may be controlled to perform lateral movement, that is, the vehicle 11 may be controlled to also move in a direction toward the lane B.

In an example, if the second status information includes the at least one second dynamic parameter and the second dynamic parameter includes the heading angle information of the vehicle 12, when a heading angle of the vehicle 12 is greater than a preset angle threshold, a turning angle of the vehicle 12 is excessively large, and in this case, the vehicle 11 may be prevented from performing lateral movement, that is, the vehicle 11 is prevented from moving in a direction toward the lane B, to prevent the vehicle 11 from having a rollover accident or the like; and when the heading angle of the vehicle 12 is less than or equal to the preset angle threshold, the vehicle 11 may be controlled to perform lateral movement, that is, the vehicle 11 may be controlled to also move in a direction toward the lane B.

In an example, if the second status information includes the at least one second dynamic parameter and the second dynamic parameter includes the duration in which the vehicle 12 is located in front of the vehicle 11 in a same lane, when the duration is less than a preset duration threshold, the duration in which the vehicle 12 is located in front of the vehicle 11 is excessively short, and in this case, the vehicle 12 is not suitable as a followed vehicle, and therefore the vehicle 11 may be prevented from performing lateral movement in this case; and when the duration is greater than or equal to the preset duration threshold, the vehicle 12 may serve as a followed vehicle, and therefore the vehicle 11 may be controlled to perform lateral movement in this case.

Likewise, whether the vehicle 11 may be controlled to perform lateral movement may be determined based on a combination of the foregoing plurality of parameters. For example, when the speed of the vehicle 11 is less than or equal to the preset speed threshold and the duration in which the vehicle 12 is located in front of the vehicle 11 in a same lane is greater than or equal to the preset duration threshold, the vehicle 11 may be controlled to perform lateral movement; and when the speed of the vehicle 11 is greater than the preset speed threshold and/or the duration in which the vehicle 12 is located in front of the vehicle 11 in a same lane is less than the preset duration threshold, the vehicle 11 may be prevented from performing lateral movement.

It should be understood that, in the case of determining whether the vehicle 11 is to be controlled to perform lateral movement, regardless of a determining result, the vehicle 11 may be controlled to perform longitudinal movement in a longitudinal movement direction of the vehicle 12, in other words, the vehicle 11 may be controlled to continue to move in an extension direction of a lane line of the lane A, to avoid affecting traveling of a vehicle behind. Optionally, when the vehicle 12 performs longitudinal movement, the vehicle 11 may be controlled to perform longitudinal movement by following the vehicle 12. Optionally, controlling the vehicle 11 to perform longitudinal movement may be controlling a throttle opening degree, a braking force, or the like of the vehicle 11.

Then, if the determining result is that the vehicle 11 is to be controlled to perform lateral movement, before the vehicle 11 is controlled to perform lateral movement, a probability that a collision occurs after the vehicle 11 performs lateral movement may be determined; and when the collision probability is less than a preset probability threshold, the vehicle 11 is controlled to perform lateral movement; or when the collision probability is greater than or equal to the preset probability threshold, the vehicle 11 is prevented from performing lateral movement, to prevent the vehicle 11 to have a collision accident or the like, and improve travel safety of the vehicle.

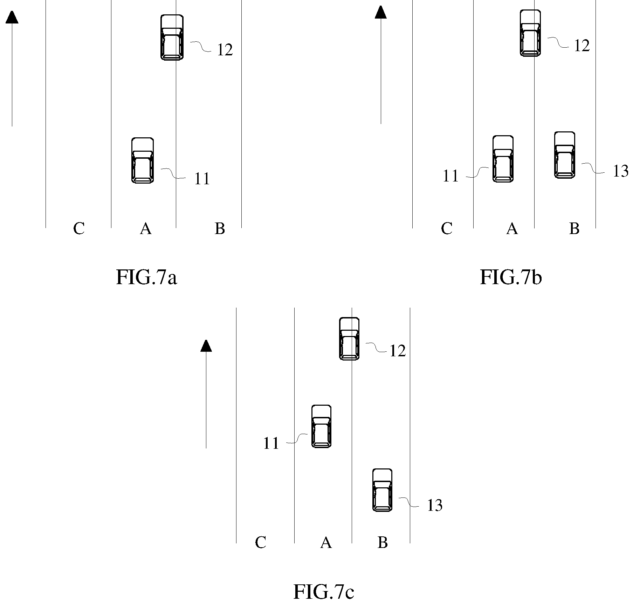

For example, as shown in FIG. 7a, in a process in which the vehicle 12 moves from the lane A to the lane B, no other vehicle travels in the lane B. In this case, a probability that a collision occurs when the vehicle 11 performs lateral movement is quite low. Therefore, in this case, the vehicle 11 may be controlled to perform lateral movement. As shown in FIG. 7b, in a process in which the vehicle 12 moves from the lane A to the lane B, the vehicle 13 exists in the lane B, and the vehicle 13 and the vehicle 11 travel side by side. In this case, a probability that a collision occurs when the vehicle 11 performs lateral movement is quite high. Therefore, in this case, the vehicle 11 may be prevented from performing lateral movement. As shown in FIG. 7c, in a process in which the vehicle 12 moves from the lane A to the lane B, the vehicle 13 exists in the lane B, and the vehicle 13 is located behind the vehicle 11. In this case, if a travel speed of the vehicle 11 in a longitudinal direction is greater than or equal to a travel speed of the vehicle 13 in the longitudinal direction, a probability that a collision occurs when the vehicle 11 performs lateral movement is low, and therefore the vehicle 11 may be controlled to perform lateral movement in this case; or if a travel speed of the vehicle 11 in a longitudinal direction is less than a travel speed of the vehicle 13 in the longitudinal direction, whether the vehicles may collide may be determined based on a trajectory prediction result for the vehicle 11 and the vehicle 13. For example, whether a collision may occur is determined by calculating a time of a collision between the vehicle 11 and the vehicle 13. A method for calculating the time of a collision may be a vehicle kinematics method, an image detection method, a vehicle trajectory intersection method, or the like.

Then, if it is determined that the vehicle 11 is to be controlled to perform lateral movement, the vehicle 11 may be controlled to perform lateral movement, and the vehicle is controlled to continue to follow the vehicle 12.

If it is determined that the vehicle 11 is to be prevented from performing lateral movement, the vehicle 11 may be prevented from performing lateral movement. In addition, in a process in which the vehicle 11 is controlled to perform longitudinal movement, whether the vehicle 12 deviates from a current lane (that is, the lane A) is determined. That the vehicle 12 deviates from the current lane means that at least a part of a body of the vehicle 12 covers a lane line of the lane A, for example, a wheel of the vehicle 12 runs over the lane line of the lane A. Optionally, the vehicle 11 may collect images of the vehicle 12 and the lane A by using an image collection apparatus, and process the collected images, to obtain a relative location relationship between the vehicle 12 and the lane line of the lane A, to further determine whether the vehicle 12 deviates from the lane A.

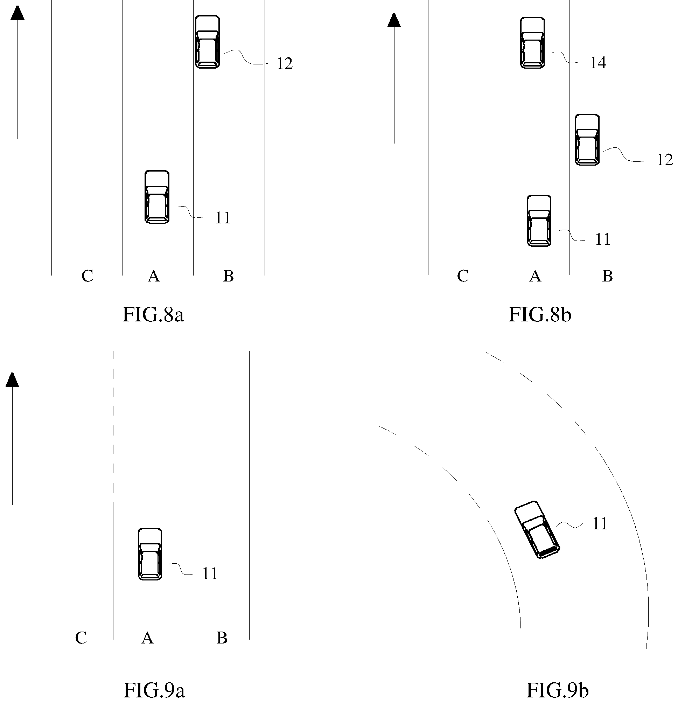

Further, if it is determined that the vehicle 12 deviates from the lane A, and as shown in FIG. 5a, the vehicle 12 enters the lane B, the vehicle 11 may be controlled to travel along the lane line of the lane A, or a follow-up target of the vehicle 11 may be re-determined. For example, as shown in FIG. 8a, if there is no other vehicle in front of the vehicle 11, the vehicle 11 may be controlled to travel along the lane line of the lane A; and as shown in FIG. 8b, if a vehicle 14 exists in front of the vehicle 11, it may be determined that the vehicle 14 is a follow-up target.

Then, in a process in which the vehicle 11 is controlled to travel along the lane line of the lane A, if it is determined that clarity of the lane line of the lane A is less than a preset clarity threshold, the vehicle 11 may be controlled to travel along a predicted lane line, to prevent the vehicle 11 from deviating from the lane A. The predicted lane line is obtained through prediction in a movement direction of the vehicle 11 based on historical data of the lane line. The historical data of the lane line may include one or more of a lane width, a lane line type (for example, a solid line or a dashed line), curb information, and the like. Optionally, the predicted lane line may be projected onto a current road, or may be projected onto a windshield of the vehicle 11, or may be presented inside a system, or the like.

For example, the vehicle 11 continuously or intermittently collects image information of the lane A during traveling, and then extracts corresponding lane line data from the image information of the lane A and stores the data. In addition, if clarity of an extracted lane line is less than the preset clarity threshold, a lane line is predicted. As shown in FIG. 9a, during traveling of the vehicle 11, the lane line of the lane A disappears. In this case, the historical data of the lane line indicates that the lane line is a straight line, and therefore a linear lane line, that is, a dashed line in FIG. 9a, may be extended in a travel direction of the vehicle 11. As shown in FIG. 9b, during traveling of the vehicle 11, the lane line of the lane A disappears. In this case, the historical data of the lane line indicates that the lane line is a curve, and therefore a curved lane line, that is, a dashed line in FIG. 9b, may be extended in a travel direction of the vehicle 11. In addition, to prevent the vehicle 11 from deviating from a road, during lane line prediction, road information of a current road may also be used as a reference factor. The road information may include a road width, a road curvature degree, or the like.

It should be understood that the vehicle 11 is controlled to travel along the predicted lane line when it is determined that the vehicle 12 deviates from the lane A and the vehicle 11 is controlled to travel along the lane line of the lane A, or when clarity of a lane line is less than the preset clarity threshold in a process in which the vehicle 11 travels by following the vehicle 12, or the like.

The following describes steps of a process of a control method provided in embodiments of this application.

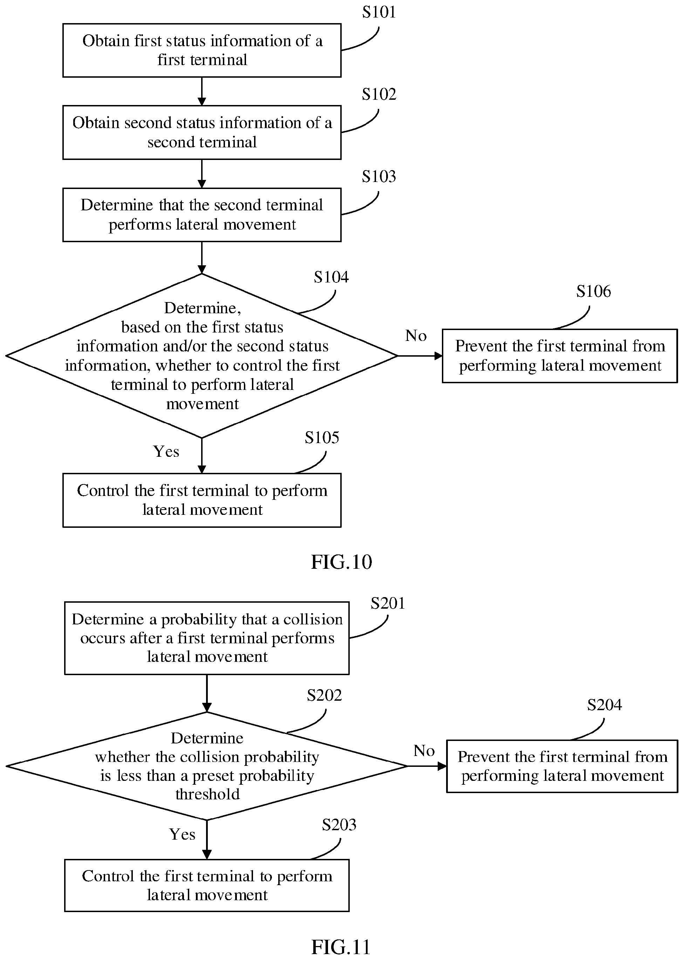

FIG. 10 is a schematic diagram of steps of a control method according to an embodiment of this application. As shown in FIG. 10, the control method includes the following steps.

Step S101: Obtain first status information of a first terminal.

Specifically, the first status information includes at least one first dynamic parameter and/or at least one first static parameter.

If the first status information includes the at least one first dynamic parameter, the first dynamic parameter may be obtained by using a sensor assembly disposed on the first terminal. The first dynamic parameter may include speed information, acceleration information, or the like of the first terminal. For example, when the first dynamic parameter is the speed information of the first terminal, the speed information of the first terminal may be obtained by using a sensor assembly (for example, a speed sensor) corresponding to a speed.

Optionally, the obtaining first status information of a first terminal includes: obtaining at least one first dynamic parameter from at least one sensor.

If the first status information includes the at least one first static parameter, the first static parameter may be prestored on the first terminal, and the first terminal may directly invoke stored data. The first static parameter includes an outline size, a model, or the like of the first terminal. For example, the first static parameter may be pre-calibrated and then stored on the first terminal. When the first static parameter is required, the first terminal may directly invoke the first static parameter.

Optionally, the obtaining first status information of a first terminal includes: obtaining at least one preset or predefined first static parameter.

Step S102: Obtain second status information of a second terminal.

Specifically, the second status information includes at least one second dynamic parameter and/or at least one second static parameter.

If the second status information includes the at least one second dynamic parameter, the second dynamic parameter may be obtained by using a sensor assembly disposed on the first terminal. The second dynamic parameter may include heading angle information of the second terminal, duration in which the second terminal is located in front of the first terminal in a same lane, or the like. For example, when the second dynamic parameter is the heading angle information of the second terminal, the first terminal may obtain the heading angle information of the second terminal by using a sensor assembly (for example, a radar sensor) on the first terminal. If the second dynamic parameter is the duration in which the second terminal is located in front of the first terminal in a same lane, when the first terminal determines that the second terminal enters a lane in which the first terminal is located and the second terminal is located in front of the first terminal, the first terminal starts to record time by using a timing apparatus such as a timer, to obtain the duration. Optionally, the first terminal and the second terminal may alternatively exchange data through a network. In this case, the second terminal may obtain a corresponding second dynamic parameter by using a sensor assembly on the second terminal, and then transmit the second dynamic parameter to the first terminal through the network, so that the first terminal obtains the second dynamic parameter.

Optionally, the obtaining second status information of a second terminal includes: obtaining at least one second dynamic parameter from at least one sensor.

If the second status information includes the at least one second static parameter, the second static parameter may be prestored on the second terminal, and the second terminal may perform data transmission with the first terminal through a network, so that the first terminal obtains the second static parameter.

Optionally, the obtaining second status information of a second terminal includes: obtaining at least one preconfigured or predefined second static parameter.

Step S103: Determine that the second terminal performs lateral movement.

Specifically, whether the second terminal performs lateral movement may be determined; and when it is determined that the second terminal performs lateral movement, step S 104 is performed; or when it is determined that the second terminal does not perform lateral movement, whether the second terminal performs lateral movement may be further determined.

In a possible implementation, a camera is disposed on the first terminal. Images of the second terminal at different moments may be collected by using the camera, an image at a specific moment is selected as a reference image, and an image collected after the moment is used as a target image. Then location coordinates of the second terminal in the target image are compared with location coordinates in the reference image, to determine whether the second terminal performs lateral movement.

In another possible implementation, sensors such as a millimeter-wave radar, a camera, and a laser radar are disposed on the first terminal. A speed vector of the second terminal may be detected by using the sensors, and the speed vector is decomposed along a normal direction of a travel direction of the first terminal to obtain a speed vector component. If the speed vector component exceeds a preset vector threshold and duration in which the speed vector component exceeds the preset vector threshold exceeds a preset time threshold, it may be determined that the second terminal performs lateral movement.

It should be understood that the lateral movement may be understood as being in a direction perpendicular to the travel direction of the first terminal. When a lane has a specific arc or a lane is not a completely straight line (for example, is a curved lane), the "being perpendicular" may be not completely perpendicular, and a movement direction from a current lane to an adjacent lane is used.

Step S 104: Determine, based on the first status information and/or the second status information, whether to control the first terminal to perform lateral movement.

Specifically, after it is determined that the second terminal performs lateral movement, whether to control the first terminal to perform lateral movement may be determined based on the obtained first status information and/or second status information.

For example, when a speed of the first terminal is greater than a preset speed threshold, a travel speed of the first terminal is high, and in this case, the first terminal may be prevented from performing lateral movement, to prevent the first terminal from having a rollover accident or the like; and when a speed of the first terminal is less than or equal to the preset speed threshold, the first terminal may be controlled to perform lateral movement.

When a heading angle of the second terminal is greater than a preset angle threshold, a turning angle of the second terminal is excessively large, and in this case, the first terminal may be prevented from performing lateral movement, to prevent the first terminal from having a rollover accident or the like; and when a heading angle of the second terminal is less than or equal to the preset angle threshold, the first terminal may be controlled to perform lateral movement.

When the second terminal is located in front of the first terminal in a same lane, and when duration in which the second terminal is located in front of the first terminal is less than a preset duration threshold, the duration in which the second terminal is located in front of the first terminal is excessively short, and in this case, the second terminal is not suitable as a followed vehicle, and therefore the first terminal may be prevented from performing lateral movement in this case; and when duration in which the second terminal is located in front of the first terminal is greater than or equal to the preset duration threshold, the second terminal may serve as a followed vehicle, and therefore the first terminal may be controlled to perform lateral movement in this case.

When a speed of the first terminal is less than or equal to the preset speed threshold and duration in which the second terminal is located in front of the first terminal in a same lane is greater than or equal to the preset duration threshold, the first terminal may be controlled to perform lateral movement; or when a speed of the first terminal is greater than the preset speed threshold and/or the duration in which the second terminal is located in front of the first terminal in a same lane is less than the preset duration threshold, the first terminal may be prevented from performing lateral movement.

When a speed of the first terminal is less than or equal to the preset speed threshold, a heading angle of the second terminal is less than or equal to the preset angle threshold, and duration in which the second terminal is located in front of the first terminal in a same lane is greater than or equal to the preset duration threshold, the first terminal may be controlled to perform lateral movement; or when a speed of the first terminal is greater than the preset speed threshold, and/or a heading angle of the second terminal is less than or equal to the preset angle threshold, and/or duration in which the second terminal is located in front of the first terminal in a same lane is less than the preset duration threshold, the first terminal may be prevented from performing lateral movement.

Likewise, whether the first terminal may be controlled to perform lateral movement may be alternatively determined based on a combination of a plurality of other parameters included in the first status information and/or the second status information. Details are not described herein.

It should be noted that, if it is determined that the first terminal is to be controlled to perform lateral movement, step S105 is performed; or if it is determined that the first terminal is to be prevented from performing lateral movement, step S106 is performed.

Step S105: Control the first terminal to perform lateral movement.

Specifically, in this case, the first terminal may be controlled to perform lateral movement. In addition, to prevent the first terminal from affecting traveling of another terminal, the first terminal may be alternatively controlled to perform longitudinal movement. The longitudinal movement may be understood as being in a direction the same as or opposite to a travel direction of the first terminal, or in a direction parallel or approximately parallel to a lane line of a lane in which the first terminal is located.

Step S106: Prevent the first terminal from performing lateral movement.

Specifically, in this case, the first terminal may be prevented from performing lateral movement. Optionally, the preventing the first terminal from performing lateral movement may be outputting a control instruction for prohibiting steering, limiting a steering angle of a steering wheel of the first terminal, stopping outputting a control instruction related to lateral movement, or the like. In addition, to prevent the first terminal from affecting traveling of another terminal, the first terminal may be alternatively controlled to perform longitudinal movement.

It should be noted that steps S101 and S102 may be performed simultaneously, or may be performed at different times. This is not limited herein. When whether to control the first terminal to perform lateral movement is determined only by using one of the first status information and the second status information, only a step of obtaining the status information may be selected from steps S101 and S102 and performed, and a step of obtaining the other status information may not be performed. This is not limited herein. In addition, an implementation principle and a technical effect of the method are similar to those described in the foregoing embodiments. For an operating process of the method, refer to a corresponding process in the foregoing embodiments.

In some embodiments, to reduce a probability that the first terminal has a collision accident when performing lateral movement, before the first terminal is controlled to perform lateral movement, whether to control the first terminal to perform lateral movement may be further determined based on a probability that a collision occurs after the first terminal performs lateral movement. As shown in FIG. 11, the method includes the following steps.

Step S201: Determine the probability that a collision occurs after the first terminal performs lateral movement.

Specifically, status information of another terminal in a movement direction in which the first terminal performs lateral movement may be sensed by using a sensor assembly on the first terminal. Then a collision time may be calculated according to a vehicle kinematics method, an image detection method, a vehicle trajectory intersection method, or another method. Finally, the collision probability is determined based on the collision time. For example, when the collision time is greater than a preset time threshold, the probability that a collision occurs after the first terminal performs lateral movement is low; and when the collision time is less than or equal to the preset time threshold, the probability that a collision occurs after the first terminal performs lateral movement is high. Optionally, a mapping relationship between the collision time and the collision probability may be preset, to help determine the collision probability. For example, the mapping relationship may be as follows: When the collision time is within an interval of 10s to 20s, the collision probability is 50%; or when the collision time is within an interval of 5s to 10s, the collision probability is 70%. When it is determined that the collision time is 7s, it may be determined that the collision probability is 70%.

Step S202: Determine whether the collision probability is less than a preset probability threshold.

Specifically, a magnitude relationship between the collision probability and the preset probability threshold may be determined by comparing the collision probability with the preset probability threshold. If the collision probability is less than the preset probability threshold, step S203 is performed; otherwise, step S204 is performed.

Step S203: Control the first terminal to perform lateral movement.

Specifically, when the collision probability is less than the preset probability threshold, the probability that a collision occurs after the first terminal performs lateral movement is low. Therefore, in this case, the first terminal may be controlled to perform lateral movement.

Step S204: Prevent the first terminal from performing lateral movement.

Specifically, when the collision probability is greater than or equal to the preset probability threshold, the probability that a collision occurs after the first terminal performs lateral movement is high. Therefore, in this case, to avoid an accident, the first terminal may be prevented from performing lateral movement.

It should be understood that an implementation principle and a technical effect of the method are similar to those described in the foregoing embodiments. For an operating process of the method, refer to a corresponding process in the foregoing embodiments.

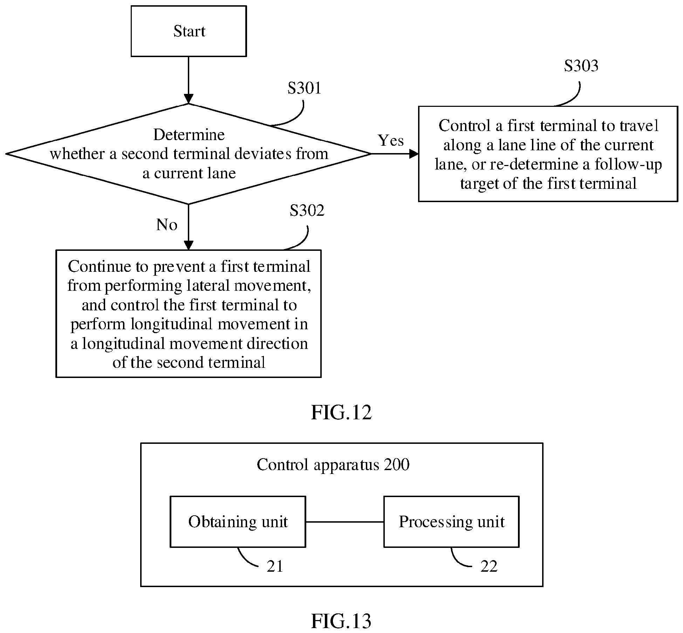

In some embodiments, after the first terminal is prevented from performing lateral movement and the first terminal is controlled to perform longitudinal movement in a longitudinal movement direction of the second terminal, the first terminal may be further controlled based on whether the second terminal deviates from a lane. As shown in FIG. 12, the method includes the following steps.

Step S301: Determine whether the second terminal deviates from a current lane.

Specifically, the first terminal may collect images of the second terminal and the current lane by using an image collection apparatus on the first terminal, and process the collected images to obtain a relative location relationship between the second terminal and a lane line of the current lane, to further determine whether the second terminal deviates from the lane. If it is determined that the second terminal does not deviate from the current lane, step S302 is performed; otherwise, step S303 is performed.

Step S302: Continue to prevent the first terminal from performing lateral movement, and control the first terminal to perform longitudinal movement in the longitudinal movement direction of the second terminal.

Specifically, when it is determined that the second terminal does not deviate from the current lane, the second terminal may still serve as a follow-up target. Therefore, the first terminal may continue to be prevented from performing lateral movement, and the first terminal is controlled to perform longitudinal movement in the longitudinal movement direction of the second terminal. That is, the first terminal follows the second terminal only in the longitudinal direction.

Step S303: Control the first terminal to travel along the lane line of the current lane, or re-determine a follow-up target of the first terminal.

Specifically, when it is determined that the second terminal deviates from the current lane, the second terminal is no longer suitable as a follow-up target. In this case, for travel safety, the first terminal may be controlled to travel along the lane line of the current lane, or a follow-up target of the first terminal may be re-determined.

It should be understood that an implementation principle and a technical effect of the method are similar to those described in the foregoing embodiments. For an operating process of the method, refer to a corresponding process in the foregoing embodiments.

In some embodiments, during traveling of the first terminal, clarity of a lane line of a lane in which the first terminal is located may be further determined, and when the clarity of the lane line is less than a preset clarity threshold, the first terminal is controlled to travel along a predicted lane line, to prevent the first terminal from deviating from the lane. The predicted lane line is obtained through prediction in a movement direction of the first terminal based on historical data of the lane line. The historical data of the lane line may include one or more of a lane width, a lane line type (for example, a solid line or a dashed line), curb information, and the like. Optionally, the predicted lane line may be projected onto a current road, or may be projected onto a windshield of the first terminal, or may be presented inside a system, or the like.

It should be understood that an implementation principle and a technical effect of the method are similar to those described in the foregoing embodiments. For an operating process of the method, refer to a corresponding process in the foregoing embodiments.

In some embodiments, before the second terminal and the first terminal are located in a same lane and the second terminal is located in front of the first terminal, the first terminal may be controlled to move by following a third terminal.

Based on the control method in the foregoing embodiments, embodiments of this application further provide a control apparatus. FIG. 13 is a schematic diagram of a structure of a control apparatus according to an embodiment of this application. As shown in FIG. 13, the control apparatus 200 includes:
an obtaining unit 21, configured to: obtain first status information of a first terminal, where the first status information includes at least one first dynamic parameter and/or at least one first static parameter; and obtain second status information of a second terminal, where the second status information includes at least one second dynamic parameter and/or at least one second static parameter; and
a processing unit 22, configured to: if it is determined that the second terminal performs lateral movement, determine, based on the first status information and/or the second status information, whether to control the first terminal to perform lateral movement.

In an example, the first status information includes at least one first dynamic parameter, and the first dynamic parameter includes speed information of the first terminal.

The processing unit 22 is further configured to: determine that a speed of the first terminal is less than or equal to a first threshold, and control the first terminal to perform lateral movement; or determine that a speed of the first terminal is greater than a first threshold, and prevent the first terminal from performing lateral movement.

In an example, the second status information includes at least one second dynamic parameter, and the second dynamic parameter includes heading angle information of the second terminal.

The processing unit 22 is further configured to: determine that a heading angle of the second terminal is less than or equal to a preset angle threshold, and control the first terminal to perform lateral movement; or determine that a heading angle of the second terminal is greater than a preset angle threshold, and prevent the first terminal from performing lateral movement.

In an example, the second status information includes at least one second dynamic parameter, and the second dynamic parameter includes duration in which the second terminal is located in front of the first terminal in a same lane.

The processing unit 22 is further configured to: determine that the duration is greater than or equal to a preset duration threshold, and control the first terminal to perform lateral movement; or determine that the duration is less than a preset duration threshold, and prevent the first terminal from performing lateral movement.

In an example, the processing unit 22 is further configured to: before controlling the first terminal to perform the lateral movement, determine a probability that a collision occurs after the first terminal performs lateral movement, and determine that the collision probability is less than a preset probability threshold.

In an example, the processing unit 22 is further configured to control the first terminal to perform longitudinal movement in a longitudinal movement direction of the second terminal.

In an example, the processing unit 22 is further configured to: after the first terminal is prevented from performing lateral movement and the first terminal is controlled to perform longitudinal movement in the longitudinal movement direction of the second terminal, determine that the second terminal deviates from a current lane, and control the first terminal to travel along a lane line of the current lane, or re-determine a follow-up target of the first terminal.

In an example, the processing unit 22 is further configured to: determine that clarity of a lane line of a lane in which the first terminal is located is less than a preset clarity threshold, and control the first terminal to travel along a predicted lane line, where the predicted lane line is obtained through prediction in a movement direction of the first terminal based on historical data of the lane line.

In an example, the processing unit 22 is further configured to: before the second terminal and the first terminal are located in a same lane and the second terminal is located in front of the first terminal, control the first terminal to move by following a third terminal.

It should be understood that the foregoing apparatus is configured to perform the method in the foregoing embodiments, and an implementation principle and a technical effect of a corresponding program module in the apparatus are similar to those described in the foregoing method. For an operating process of the apparatus, refer to a corresponding process in the foregoing method. Details are not described herein again.

The following describes another control apparatus provided in embodiments of this application.

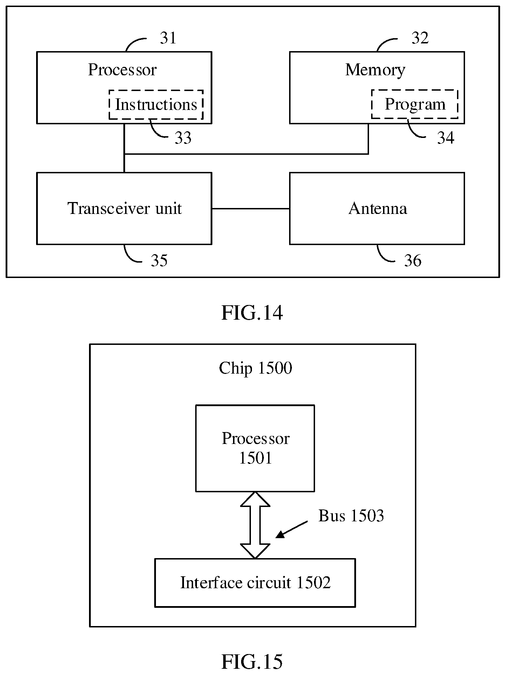

FIG. 14 is a schematic diagram of a structure of another control apparatus according to an embodiment of this application. FIG. 14 shows the control apparatus provided in this embodiment of this application. The control apparatus may be configured to implement the control method described in the foregoing method embodiments.

The control apparatus includes at least one processor 31. The at least one processor 31 may support the control apparatus in implementing the control method provided in embodiments of this application.

The processor 31 may be a general-purpose processor or a dedicated processor. For example, the processor 31 may include a central processing unit (central processing unit, CPU) and/or a baseband processor. The baseband processor may be configured to process communication data (for example, determine a target screen terminal). The CPU may be configured to implement corresponding control and processing functions, execute a software program, and process data of the software program.

Further, the control apparatus may further include a transceiver unit 35, configured to input (receive) or output (send) a signal. For example, the transceiver unit 35 may include a transceiver or a radio frequency chip. The transceiver unit 35 may further include a communications interface.

Optionally, the control apparatus may further include an antenna 36 that may be configured to support the transceiver unit 35 in implementing a transceiver function of the control apparatus.

Optionally, the control apparatus may include one or more memories 32 that store a program (which may be alternatively instructions or code) 34. The program 34 may be run by the processor 31, so that the processor 31 performs the method described in the foregoing method embodiments. Optionally, the memory 32 may further store data. Optionally, the processor 31 may further read the data (for example, prestored first feature information) stored in the memory 32. The data and the program 34 may be stored at a same storage address, or the data and the program 34 may be stored at different storage addresses.

The processor 31 and the memory 32 may be disposed separately, or may be integrated together, for example, integrated on a board or a system-on-a-chip (system-on-a-chip, SoC).

For detailed descriptions of operations performed by the control apparatus in the foregoing possible designs, refer to descriptions in embodiments of the control method provided in embodiments of this application. Details are not described herein again.

An embodiment of this application further provides a terminal device. The terminal device may be a transportation tool or an intelligent device. The transportation tool or the intelligent device includes an unmanned aerial vehicle, an unmanned transportation vehicle, a car, a robot, or the like. The transportation tool or the intelligent device includes the control apparatus in the foregoing embodiments.

FIG. 15 is a schematic diagram of a structure of a chip according to an embodiment of this application. The chip 1500 includes one or more processors 1501 and an interface circuit 1502. Optionally, the chip 1500 may further include a bus 1503.

The processor 1501 may be an integrated circuit chip and has a signal processing capability. In an implementation process, the steps in the foregoing method may be implemented by using a hardware integrated logical circuit in the processor 1501, or by using instructions in a form of software. The processor 1501 may be a general-purpose processor, a digital signal processor (DSP), an application-specific integrated circuit (ASIC), a field programmable gate array (FPGA) or another programmable logic device, a discrete gate or a transistor logic device, or a discrete hardware component, and may implement or perform the methods and steps disclosed in embodiments of this application. The general-purpose processor may be a microprocessor, or the processor may be any conventional processor or the like.

The interface circuit 1502 may be configured to send or receive data, instructions, or information. The processor 1501 may perform processing by using data, instructions, or other information received by the interface circuit 1502, and may send processed information by using the interface circuit 1502.

Optionally, the chip further includes a memory. The memory may include a read-only memory and a random access memory, and provide operation instructions and data for the processor. A part of the memory may further include a non-volatile random access memory (NVRAM).

Optionally, the memory stores executable software modules or data structures, and the processor may perform a corresponding operation by invoking an operation instruction (the operation instruction may be stored in an operating system) stored in the memory.

Optionally, the chip may be used in the control apparatus included in embodiments of this application. Optionally, the interface circuit 1502 may be configured to output an execution result of the processor 1501. For the control method provided in one or more embodiments of this application, refer to the foregoing embodiments. Details are not described herein again.

It should be noted that functions corresponding to the processor 1501 and the interface circuit 1502 may be implemented by using a hardware design, or may be implemented by using a software design, or may be implemented by using a combination of software and hardware. This is not limited herein.

It should be understood that the steps in the foregoing method embodiments may be performed by using a logic circuit in a hardware form or instructions in a software form in the processor. The processor may be a CPU, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component.

It should be noted that the processor in embodiments of this application may be a central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor or the like.

The method steps in embodiments of this application may be implemented in a hardware manner, or may be implemented in a manner of executing software instructions by the processor. The software instructions may include corresponding software modules. The software modules may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium or write information into the storage medium. Certainly, the storage medium may be a component of the processor. The processor and the storage medium may be disposed in an ASIC.

All or some of embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on a computer, all or some of procedures or functions according to embodiments of this application are generated. The computer may be a general-purpose computer, a special-purpose computer, a computer network, or another programmable apparatus. The computer instructions may be stored in a computer-readable storage medium or may be transmitted by using the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

It may be understood that various numbers in embodiments of this application are merely used for distinguishing for ease of description, and are not used to limit the scope of embodiments of this application.

## Claims

1. A control method, wherein the method comprises:
obtaining first status information of a first terminal, wherein the first status information comprises at least one first dynamic parameter and/or at least one first static parameter;
obtaining second status information of a second terminal, wherein the second status information comprises at least one second dynamic parameter and/or at least one second static parameter;
determining that the second terminal performs lateral movement; and
determining, based on the first status information and/or the second status information, whether to control the first terminal to perform lateral movement.

2. The method according to claim 1, wherein the first status information comprises at least one first dynamic parameter, and the first dynamic parameter comprises speed information of the first terminal; and
the determining, based on the first status information and/or the second status information, whether to control the first terminal to perform lateral movement comprises:
determining that a speed of the first terminal is less than or equal to a first threshold, and controlling the first terminal to perform lateral movement; or
determining that a speed of the first terminal is greater than a first threshold, and preventing the first terminal from performing lateral movement.

3. The method according to claim 1, wherein the second status information comprises at least one second dynamic parameter, and the second dynamic parameter comprises heading angle information of the second terminal; and
the determining, based on the first status information and/or the second status information, whether to control the first terminal to perform lateral movement comprises:
determining that a heading angle of the second terminal is less than or equal to a preset angle threshold, and controlling the first terminal to perform lateral movement; or
determining that a heading angle of the second terminal is greater than a preset angle threshold, and preventing the first terminal from performing lateral movement.

4. The method according to claim 1, wherein the second status information comprises at least one second dynamic parameter, and the second dynamic parameter comprises duration in which the second terminal is located in front of the first terminal in a same lane; and
the determining, based on the first status information and/or the second status information, whether to control the first terminal to perform lateral movement comprises:
determining that the duration is greater than or equal to a preset duration threshold, and controlling the first terminal to perform lateral movement; or
determining that the duration is less than a preset duration threshold, and preventing the first terminal from performing lateral movement.

5. The method according to any one of claims 2 to 4, wherein before the controlling the first terminal to perform lateral movement, the method comprises:
determining a probability that a collision occurs after the first terminal performs lateral movement, and determining that the collision probability is less than a preset probability threshold.

6. The method according to any one of claims 1 to 4, wherein the method further comprises:
controlling the first terminal to perform longitudinal movement in a longitudinal movement direction of the second terminal.

7. The method according to claim 6, wherein the method further comprises:
after the first terminal is prevented from performing lateral movement and the first terminal is controlled to perform longitudinal movement in the longitudinal movement direction of the second terminal, determining that the second terminal deviates from a current lane, and controlling the first terminal to travel along a lane line of the current lane, or re-determining a follow-up target of the first terminal.

8. The method according to any one of claims 1 to 4, wherein the method further comprises:
determining that clarity of a lane line of a lane in which the first terminal is located is less than a preset clarity threshold, and controlling the first terminal to travel along a predicted lane line, wherein the predicted lane line is obtained through prediction in a movement direction of the first terminal based on historical data of the lane line.

9. The method according to any one of claims 1 to 4, wherein the method further comprises:
before the second terminal and the first terminal are located in a same lane and the second terminal is located in front of the first terminal, controlling the first terminal to move by following a third terminal.

10. A control apparatus, wherein the apparatus comprises:
an obtaining unit, configured to: obtain first status information of a first terminal, wherein the first status information comprises at least one first dynamic parameter and/or at least one first static parameter; and obtain second status information of a second terminal, wherein the second status information comprises at least one second dynamic parameter and/or at least one second static parameter; and
a processing unit, configured to: if it is determined that the second terminal performs lateral movement, determine, based on the first status information and/or the second status information, whether to control the first terminal to perform lateral movement.

11. The apparatus according to claim 10, wherein the first status information comprises at least one first dynamic parameter, and the first dynamic parameter comprises speed information of the first terminal; and
the processing unit is further configured to: determine that a speed of the first terminal is less than or equal to a first threshold, and control the first terminal to perform lateral movement; or determine that a speed of the first terminal is greater than a first threshold, and prevent the first terminal from performing lateral movement.

12. The apparatus according to claim 10, wherein the second status information comprises at least one second dynamic parameter, and the second dynamic parameter comprises heading angle information of the second terminal; and
the processing unit is further configured to: determine that a heading angle of the second terminal is less than or equal to a preset angle threshold, and control the first terminal to perform lateral movement; or determine that a heading angle of the second terminal is greater than a preset angle threshold, and prevent the first terminal from performing lateral movement.

13. The apparatus according to claim 10, wherein the second status information comprises at least one second dynamic parameter, and the second dynamic parameter comprises duration in which the second terminal is located in front of the first terminal in a same lane; and
the processing unit is further configured to: determine that the duration is greater than or equal to a preset duration threshold, and control the first terminal to perform lateral movement; or determine that the duration is less than a preset duration threshold, and prevent the first terminal from performing lateral movement.

14. The apparatus according to any one of claims 11 to 13, wherein the processing unit is configured to: before controlling the first terminal to perform lateral movement, determine a probability that a collision occurs after the first terminal performs lateral movement, and determine that the collision probability is less than a preset probability threshold.

15. The apparatus according to any one of claims 10 to 13, wherein the processing unit is further configured to control the first terminal to perform longitudinal movement in a longitudinal movement direction of the second terminal.

16. The apparatus according to claim 15, wherein the processing unit is further configured to: after the first terminal is prevented from performing lateral movement and the first terminal is controlled to perform longitudinal movement in the longitudinal movement direction of the second terminal, determine that the second terminal deviates from a current lane, and control the first terminal to travel along a lane line of the current lane, or re-determine a follow-up target of the first terminal.

17. The apparatus according to any one of claims 10 to 13, wherein the processing unit is further configured to:
determine that clarity of a lane line of a lane in which the first terminal is located is less than a preset clarity threshold, and control the first terminal to travel along a predicted lane line, wherein the predicted lane line is obtained through prediction in a movement direction of the first terminal based on historical data of the lane line.

18. The apparatus according to any one of claims 10 to 13, wherein the processing unit is further configured to:
before the second terminal and the first terminal are located in a same lane and the second terminal is located in front of the first terminal, control the first terminal to move by following a third terminal.

19. A control apparatus, comprising:
at least one memory, configured to store a program; and
at least one processor, configured to execute the program stored in the memory, wherein when the program stored in the memory is executed, the processor is configured to perform the method according to any one of claims 1 to 9.

20. A terminal device, comprising the apparatus according to any one of claims 10 to 19.

21. A computer-readable storage medium, wherein the computer storage medium stores instructions, and when the instructions are run on a computer, the computer is enabled to perform the method according to any one of claims 1 to 9.

22. A computer program product comprising instructions, wherein when the instructions are run on a computer, the computer is enabled to perform the method according to any one of claims 1 to 9.

23. A chip, comprising at least one processor and an interface, wherein
the interface is configured to provide program instructions or data for the at least one processor; and
the at least one processor is configured to execute the program instructions, to implement the method according to any one of claims 1 to 9.
